# EUROPEAN PATENT APPLICATION

(11) **EP 4 564 474 A1**
(43) Date of publication of application: **04.06.2025**
(21) Application number: 23846298.0
(22) Date of filing: 18.07.2023
(51) Int. Cl.: H01M 4/48, H01M 4/36

(54) **NEGATIVE ELECTRODE ACTIVE MATERIAL FOR NONAQUEOUS ELECTROLYTE SECONDARY BATTERY, AND METHOD FOR SAID PRODUCING NEGATIVE ELECTRODE ACTIVE MATERIAL**

(30) Priority: 25.07.2022 JP 2022118244
(71) Applicant: SHIN-ETSU CHEMICAL CO., LTD., Tokyo 1000005 (JP)
(72) Inventor: TAKAHASHI, Kohta, Annaka-shi, Gunma 379-0125 (JP); MURAYAMA, Masaki, Annaka-shi, Gunma 379-0125 (JP); HIROSE, Takakazu, Annaka-shi, Gunma 379-0125 (JP); OSAWA, Yusuke, Annaka-shi, Gunma 379-0125 (JP); KOSHIKAWA, Hidenori, Annaka-shi, Gunma 379-0125 (JP)
(74) Representative: Sonnenhauser, Thomas Martin
(86) International application number: PCT/JP2023/026238
(87) International publication number: WO 2024/024567

(57) **Abstract**

The present invention is a negative electrode active material for a non-aqueous electrolyte secondary battery containing negative electrode active material particles in which the negative electrode active material particles include silicon compound particles containing a silicon compound (SiOₓ: 0.5≤x≤1.6), in which the silicon compound particles are a negative electrode active material for a non-aqueous electrolyte secondary battery containing a Li compound, the negative electrode active material particles are at least partially coated with a carbon coating, an amount of the carbon coating on the negative electrode active material particles relative to a total amount of the silicon compound particles and the carbon coating is larger than 0 mass% and 1 mass% or less, the carbon coating contains a coating composed of at least any one of a compound having O-C=O bond and a compound having C-C bond, and the silicon compound particles contain crystalline Li₂SiO₃ as the Li compound. Thereby, the negative electrode active material for a non-aqueous electrolyte secondary battery having a large capacity, excellent cycle characteristics, and first-time efficiency is provided.

## Description

### TECHNICAL FIELD

The present invention relates to a negative electrode active material for a non-aqueous electrolyte secondary battery, a method for producing the same.

### BACKGROUND ART

In recent years, small electronic devices, represented by mobile terminals, have been widely used and urgently required to reduce the size and weight and to increase life. Such market requirements have advanced the development of particularly small and lightweight secondary batteries with higher energy density. These secondary batteries are considered to find application not only for small electronic devices but for large electronic devices such as, typically, automobiles as well as power storage systems such as, typically, houses.

Among those, lithium-ion secondary batteries are easy to reduce the size and increase the capacity and have higher energy density than that of lead or nickelcadmium batteries, receiving considerable attention.

The lithium-ion secondary battery described above has a positive electrode, a negative electrode, a separator, and an electrolytic solution. The negative electrode includes a negative electrode active material related to charging and discharging reactions.

A negative electrode active material, which is usually made of a carbon material (carbon-based active material), is required to further improve the battery capacity for recent market requirements. The use of silicon as a negative electrode active material is considered to improve the battery capacity, for silicon has a theoretical capacity (4199 mAh/g) ten times or larger than graphite (372 mAh/g). Such a material is thus expected to significantly improve the battery capacity. The development of silicon materials for use as negative electrode active materials includes not only silicon as a simple but also alloy thereof and a compound thereof such as typically oxides. The consideration of active material shapes ranges from an application type, which is standard for carbon-based active materials, to an integrated type in which the materials are directly accumulated on a current collector.

The use of silicon as a main material of a negative electrode active material, however, expands and shrinks the negative electrode active material when charging or discharging, thereby making the negative electrode active material easy to break, particularly near a surface layer thereof. In addition, this negative electrode active material produces ionic substances in an interior thereof and is thus easy to break. The breakage of the surface layer of the negative electrode active material creates a new surface, increasing a reaction area of the active material. The new surface then causes the decomposition reaction of the electrolytic solution and is coated with a decomposition product of the electrolytic solution, thereby consuming the electrolytic solution. This makes cycle characteristics easy to reduce.

Up to this point, silicon oxide as a negative electrode active material has been tried to be doped with lithium to improve the battery first-time efficiency and cycle characteristics (see, for example, Patent Document 1 below). When silicon oxide as the negative electrode active material incorporated with lithium is used to prepare a negative electrode, this enables a less irreversible component; thus, improvement in the first-time efficiency can be expected. In addition, this improvement in the first-time efficiency is expected to increase the capacity of the lithium-ion secondary battery.

However, while the first-time efficiency of silicon oxide as the negative electrode active material is being improved, but still low compared with a positive electrode material such as LiCoO₂ (lithium-cobalt oxide) currently being used (for example, see Patent Document 2), and further improvement of the efficiency is required.

### CITATION LIST

### PATENT LITERATURE

Patent Document 1: JP 2011-222153 A
Patent Document 2: JP 2020-113495 A

### SUMMARY OF INVENTION

### TECHNICAL PROBLEM

The present invention has been made in view of the above-described problems. An object of the present invention is to provide a negative electrode active material for a non-aqueous electrolyte secondary battery with a high capacity, excellent cycle characteristics, and excellent first-time efficiency. Moreover, the object of the present invention is to provide a method for producing such a negative electrode active material for a non-aqueous electrolyte secondary battery.

### SOLUTION TO PROBLEM

To achieve the above object, the present invention provides a negative electrode active material for a non-aqueous electrolyte secondary battery containing negative electrode active material particles in which the negative electrode active material particles comprise silicon compound particles containing a silicon compound (SiOₓ: 0.5≤x≤1.6), wherein
the silicon compound particles are a negative electrode active material for a non-aqueous electrolyte secondary battery containing a Li compound,
the negative electrode active material particles are at least partially coated with a carbon coating,
an amount of the carbon coating on the negative electrode active material particles relative to a total amount of the silicon compound particles and the carbon coating is larger than 0 mass% and 1 mass% or less,
the carbon coating contains a coating composed of at least any one of a compound having O-C=O bond and a compound having C-C bond, and
the silicon compound particles contain crystalline Li₂SiO₃ as the Li compound.

Since the inventive negative electrode active material contains the negative electrode active material particles containing the silicon compound particles, resulting in a high battery capacity. Moreover, in the silicon compound, a SiO₂ component, which becomes unstable by insertion and release of lithium during charging and discharging of a battery, is modified to another Li compound in advance, thus, an irreversible capacity generated in charging can be reduced. Furthermore, these negative electrode active material particles include the carbon coating, which provides appropriate electric conductivity, and thus capacity retention rate and first-time efficiency can be improved. Furthermore, the high-capacity negative electrode active material can be obtained without reducing the capacity of the silicon compound particles because the amount of the carbon coating is larger than 0 mass% and 1 mass% or less. Moreover, by containing the coating composed of at least any one of the compound having O-C=O bond and the compound having C-C bond, a binding property of a binder during preparation of an aqueous slurry is improved. As a result, battery characteristics are improved. Moreover, by containing Li₂SiO₃, which is a stable lithium compound in water, the stable state can be maintained by suppressing gas generation in the aqueous slurry, consequently, leading to improvement in the first-time efficiency and capacity retention rate. Note that, hereinafter, the negative electrode active material particles containing the silicon compound particles are also referred to as silicon-based active material particles. Moreover, the negative electrode active material containing these silicon-based active material particles is also referred to as silicon-based active material.

In this case, it is preferred that the negative electrode active material has an intensity ratio of 0≤Ia/Ib≤3.0 where an intensity Ia around 290 eV is attributable to the O-C=O bond and an intensity Ib around 285 eV is attributable to the C-C bond both obtained by an X-ray photoelectron spectroscopy (XPS).

When Ia/Ib is within this range, the binding property of the binder during the preparation of the aqueous slurry is improved, resulting in improved battery characteristics. When Ia/Ib is 0 or more, compatibility with the slurry is improved, and the dispersibility of the slurry is improved, as a result, the battery characteristics are improved. On the other hand, when Ia/Ib is 3.0 or less, a side reaction on the surface of the active material during charging or discharging is suppressed, thereby improving the battery characteristics.

Meanwhile, it is preferred that the negative electrode active material satisfies 1≤Ie/Ic≤18.5 with an intensity Ie around 2θ=18.7° attributable to Li₂SiO₃ compared to an intensity Ic around 2θ=47.5° attributable to Si, as obtained by an X-ray diffraction.

When the intensity ratio Ie/Ic is 18.5 or less, generation of gas in the aqueous slurry can be suppressed, and stability of the slurry is easier to ensure. On the other hand, when the intensity ratio Ie/Ic is 1 or more, doped Li is more stabilized and the generation of the gas in the aqueous slurry can be suppressed.

In this case, it is preferred that a peak around 2θ=18.7° attributable to Li₂SiO₃ obtained by the X-ray diffraction of the negative electrode active material has a half-value width of 0.5° or more and 3.0° or less.

In this way, due to the peak around 2θ=18.7° attributable to Li₂SiO₃ obtained by the X-ray diffraction having the half-value width of 0.5° or more and 3.0° or less, the elution of alkali components into the aqueous slurry can be suppressed, thereby obtaining better battery characteristics.

Moreover, in the inventive negative electrode active material for a non-aqueous electrolyte secondary battery, it is preferred that a crystallite size attributable to a Si(220) crystal face obtained by the X-ray diffraction of the negative electrode active material is 5 nm or less.

When the crystallite size attributable to the Si(220) crystal face is in a range described above, the better battery characteristics can be obtained.

Moreover, the negative electrode active material preferably has at least one or more peaks in at least one region given as chemical shift values of a region of -80 ppm or more and less than -70 ppm, a region of -70 ppm or more and less than -60 ppm, and a region of -60 ppm or more and less than -30 ppm, which are obtained from a ²⁹Si-MAS-NMR spectrum of the negative electrode active material.

As the chemical shift values, the peak around -60 ppm or more and less than -30 ppm is attributable to low-valent silicon oxide, the peak around -70 ppm or more and less than -60 ppm is attributable to Li₆Si₂O₇ components, the peak around -80 ppm or more and less than -70 ppm is attributable to Li₂SiO₃ components. Accordingly, by having at least one or more peaks in at least one of the above regions, the elution of alkali components into the aqueous slurry can be suppressed, thereby obtaining the better battery characteristics. Note that a peak attributable to Li₆Si₂O₇ components may be present as the peak around the region of -70 ppm or more and less than -60 ppm, but substantial absence is more preferable. That is, the presence of at least one of the peaks around -60 ppm or more and less than -30 ppm and the peak around -80 ppm or more and less than - 70 ppm is more preferable to the presence of the peak around the region of -70 ppm or more and less than -60 ppm.

In addition, it is preferred that those peak intensity ratios If/Ii and Ih/Ii obtained from the ²⁹Si-MAS-NMR spectrum of the negative electrode active material satisfy both 0≤If/Ii≤0.23 and 0≤Ih/Ii≤1.1, where

If represents a peak intensity of the peak obtained as the chemical shift value in the region of -60 ppm or more and less than -30 ppm,

Ih represents a peak intensity of the peak obtained as the chemical shift value in the region of -70 ppm or more and less than -60 ppm, and

Ii represents a peak intensity of the peak obtained as the chemical shift value in the region of -80 ppm or more and less than -70 ppm.

Silicon-based compound particles having such NMR peaks can suppress the elution of the alkali components into the aqueous slurry, thereby obtaining the better battery characteristics. Note that, as described above, the peak around the region of -70 ppm or more and less than -60 ppm is the peak attributable to the Li₆Si₂O₇ components; the absence of this peak is substantially preferable, and Ih/Ii=0 is more preferable.

Moreover, in the inventive negative electrode active material for a non-aqueous electrolyte secondary battery, it is preferred that an intensity ratio Id/Ig of a D band and a G band in Raman spectrometry of the negative electrode active material is 0≤Id/Ig≤2.0.

When 0≤Id/Ig≤2.0, exfoliation of the carbon coating or a side reaction on a carbon surface due to expansion and shrinkage can be suppressed, thereby obtaining the better battery characteristics.

Moreover, an intensity ratio ISi/Ig of a peak intensity of Si and a G band in Raman spectrometry of the negative electrode active material is preferably 0≤ISi/Ig≤5.0.

In this way, when 0≤ISi/Ig≤5.0, it is possible to delay the gas generation in the aqueous slurry while suppressing surface exposure of the silicon-based compound particles, thereby obtaining the better battery characteristics.

In addition, the silicon compound particles preferably have a median diameter of 0.5 µm or more and 20 µm or less.

When this median diameter is 0.5 µm or more, the side reaction occurs in a small area on the surface of the silicon compound particles. As a result, the battery can keep the cycle retention rate high without excessive consumption of Li. Meanwhile, when this median diameter is 20 µm or less, the expansion is less during the Li insertion and is hard to break and form a crack. Further, since the expansion of the silicon compound particles is small, for example, a negative electrode active material layer and the like in which a commonly used silicon-based active material is mixed with a carbon active material become hard to break.

Moreover, it is possible that the negative electrode active material particles either do not contain Li₂CO₃; or a portion of an outermost surface of the particle is coated with crystalline Li₂CO₃, in addition, the negative electrode active material satisfies 0≤Ij/Ic≤10 with a peak intensity Ij around 2θ=21° attributable to Li₂CO₃, compared to an intensity Ic around 2θ=47.5° attributable to Si, as obtained by the X-ray diffraction.

When ionic substances of the crystalline Li₂CO₃ are contained on the outermost surface of the negative electrode active material particles, the binding property of a binder when preparing the aqueous slurry is improved. When Ij/Ic≤10, the pH of the slurry can be made within an appropriate range when preparing the aqueous slurry, thus preventing gas generation and viscosity reduction of the slurry. Moreover, from the viewpoints of both the improvement of the binding property of the binder and pH increase, it is preferred that the crystalline Li₂CO₃ is substantially not contained.

Moreover, in the inventive negative electrode active material for a non-aqueous electrolyte secondary battery, the negative electrode active material may be coated with a carbon layer that is different from the carbon coating.

Moreover, in the inventive negative electrode active material for a non-aqueous electrolyte secondary battery, the negative electrode active material is preferably coated with the carbon coating which has a peak attributable to the G band in Raman spectrometry of the negative electrode active material in a range of 1588 cm⁻¹ to 1598 cm⁻¹.

In this way, by coating the outermost surface of the silicon compound with the carbon coating which has a peak attributable to the G band in Raman spectrometry in a range of 1588 cm⁻¹ to 1598 cm⁻¹, excellent electric conductivity can be secured, thereby obtaining the better battery characteristics.

In addition, in order to achieve the above object, the present invention provides a non-aqueous electrolyte secondary battery, comprising any of the above-described negative electrode active materials for a non-aqueous electrolyte secondary battery.

Such a secondary battery has a high cycle retention rate and first-time efficiency and can be produced industrially with advantage.

In addition, the present invention provides a mobile terminal, an electric vehicle, and a power storage system comprising the above-described non-aqueous electrolyte secondary battery.

The non-aqueous electrolyte secondary battery including the inventive negative electrode active material for a non-aqueous electrolyte secondary battery can be used for these applications.

In addition, in order to achieve the above object, the present invention provides a method for producing a negative electrode active material for a non-aqueous electrolyte secondary battery containing negative electrode active material particles, the method comprising steps of:
preparing silicon compound particles containing a silicon compound (SiOₓ: 0.5≤x≤1.6);
inserting Li into the silicon compound particles to produce Li₂SiO₃ as a Li compound; and
further coating at least part of the silicon compound particles with carbon coating either simultaneously with or following inserting Li into the silicon compound particles, wherein
the negative electrode active material particles are carbon-coated so as to make an amount of carbon coating larger than 0 mass% and 1 mass% or less relative to a total amount of the silicon compound particles and a carbon coating, and the carbon coating composed of at least any one of a compound having O-C=O bond and a compound having C-C bond.

Such a method for producing the negative electrode active material for a non-aqueous electrolyte secondary battery can obtain the non-aqueous negative electrode active material having high battery capacity and favorable cycle retention rate, which reflect intrinsic characteristics of silicon oxide modified using Li.

In this case, the step of inserting Li into the silicon compound particles is preferably performed by either an electrochemical method or a method by redox reaction.

### ADVANTAGEOUS EFFECTS OF INVENTION

The inventive negative electrode active material is capable of improving the stability of the slurry prepared to produce the secondary battery. The use of this slurry enables the formation of an industrially-utilizable coating film, thereby substantially improving the battery capacity, cycle characteristics, and first-time charge-discharge characteristics. Moreover, the inventive secondary battery containing this negative electrode active material can be produced industrially with advantage and has favorable battery capacity, cycle characteristics, and first-time charge-discharge characteristics. Further, the same effects can also be attained from an electronic device such as a mobile terminal, a power tool, an electric vehicle, a power storage system, etc., which uses the inventive secondary battery.

Moreover, the inventive method for producing the negative electrode active material can produce the negative electrode material, which is capable of improving not only the stability of the slurry prepared in producing the secondary battery but also the battery capacity, the cycle characteristics, and the first-time charge-discharge characteristics.

### BRIEF DESCRIPTION OF DRAWINGS

FIG. 1 is a sectional view illustrating an example of a configuration of a negative electrode for a non-aqueous electrolyte secondary battery containing a negative electrode active material according to the present invention.
FIG. 2 shows a bulk modification apparatus usable in producing a negative electrode active material according to the present invention.
FIG. 3 is an exploded view illustrating a configuration example (laminate film type) of a lithium-ion secondary battery that contains a negative electrode active material according to the present invention.

### DESCRIPTION OF EMBODIMENTS

Hereinafter, embodiments of the present invention will be described, but the present invention is not limited thereto.

As described above, as a technique to increase battery capacity of a lithium-ion secondary battery, the use of a negative electrode mainly made from a silicon-based active material as a negative electrode for the lithium-ion secondary battery has been investigated. The lithium-ion secondary battery using the silicon-based active material as the main material is desired to have first-time efficiency and cycle characteristics almost equivalent to those of a lithium-ion secondary battery using a carbon material (carbon-based negative electrode active material). However, no negative electrode material has been proposed that exhibits cycle stability equivalent to that of a non-aqueous electrolyte secondary battery using carbon material (carbon-based negative electrode active material). In particular, a silicon compound containing oxygen exhibits low first-time efficiency in comparison with that exhibited with carbon material (carbon-based negative electrode active material); thus, the improvement in the battery capacity has been limited by this low first-time efficiency.

The present inventors, therefore, have diligently investigated to obtain a negative electrode active material that can easily produce a non-aqueous electrolyte secondary battery having high battery capacity, favorable cycle characteristics, and favorable first-time efficiency, and have achieved the present invention.

### [Inventive Negative Electrode Active Material]

An inventive negative electrode active material for a non-aqueous electrolyte secondary battery has negative electrode active material particles. Moreover, the negative electrode active material particles contain silicon compound particles of a silicon compound (SiOₓ: 0.5≤x≤1.6). Furthermore, the silicon compound particles contain a Li compound. Moreover, these negative electrode active material particles are at least partially coated with a carbon coating. An amount of the carbon coating on the negative electrode active material particles relative to a total amount of the silicon compound particles and the carbon coating is larger than 0 mass% and 1 mass% or less, and the carbon coating contains a coating composed of at least any one of a compound having O-C=O bond and a compound having C-C bond. In addition, silicon compound particles contain crystalline Li₂SiO₃ as the Li compound.

Such a negative electrode active material has high battery capacity because the negative electrode active material particles containing silicon compound are contained. Moreover, in the silicon compound, a SiO₂ component portion, which otherwise becomes unstable by inserting and releasing lithium in charging or discharging the battery, is modified in advance to another Li compound. As a result, the irreversible capacity generated during charging can be reduced. Moreover, the negative electrode active material has the carbon-coating thereon, and an amount of the carbon coating relative to a total amount of the silicon compound and the carbon coating layer is larger than 0 mass% and 1 mass% or less, capacity is not degraded while maintaining appropriate electric conductivity. As a result, high capacity, high capacity retention rate, and high first-time efficiency are achieved. In addition, adhesion to the binder is improved by having a coating composed of at least any one of the compound having O-C=O bond and the compound having C-C bond. As a result, the battery characteristics are improved. Furthermore, with containing Li₂SiO₃ which is a lithium compound stable in water, gas generation is suppressed even in an aqueous slurry, and a stable state can be maintained. As a result, the first-time efficiency and capacity retention rate can be improved. XPS measurement can be performed under, for example, the following conditions.

### XPS

· Apparatus: X-ray Photoelectron Spectrometer,
· X-ray Source: Monochromatic Al Kα ray,
· X-ray Spot Diameter: 100 µm,
· Ar-ion Gun Sputtering Conditions: 0.5 kV 2 mm×2 mm.

### [Configuration of Negative Electrode]

Next, a description will be given for a configuration of a negative electrode of a secondary battery, which contains such inventive negative electrode active material.

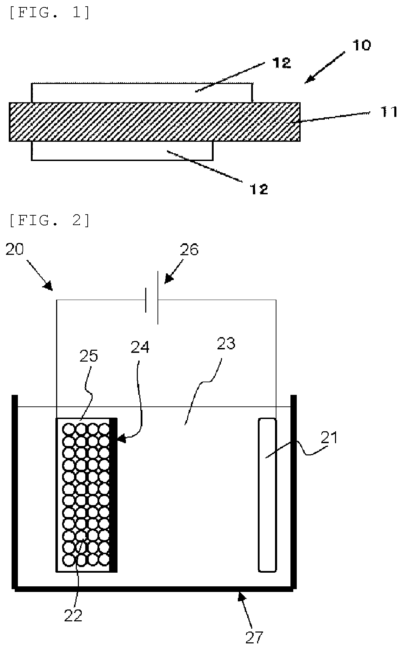

FIG. 1 shows a sectional view of a negative electrode containing the inventive negative electrode active material. As shown in FIG. 1, a negative electrode 10 is configured to have a negative electrode active material layer 12 on a negative electrode current collector 11. This negative electrode active material layer 12 may be provided on both sides or only one side of the negative electrode current collector 11. Furthermore, as long as the inventive negative electrode active material for a non-aqueous electrolyte secondary battery is used, the negative electrode current collector 11 is not essential.

### [Negative Electrode Current Collector]

The negative electrode current collector 11 is made of a highly electric conductive and mechanically strong material. Examples of the electric conductive materials usable for the negative electrode current collector 11 include copper (Cu) and nickel (Ni). This electric conductive material is preferably a material that does not form an intermetallic compound with lithium (Li).

The negative electrode current collector 11 preferably contains carbon (C) and sulfur (S), besides the main element, because these elements improve the physical strength of the negative electrode current collector. In particular, when an active material layer that expands in charging is disposed, the current collector containing the above elements has an effect of suppressing deformation of the electrode including the current collector. The content of the contained elements described above is not particularly limited but among them, 100 ppm or less is preferred. This is because a higher effect of suppressing deformation is obtained.

Additionally, the surface of the negative electrode current collector 11 may or may not be roughened. Examples of the roughened negative electrode current collector include a metallic foil subjected to an electrolyzing process, embossing process, chemical etching process, etc. Examples of the negative electrode current collector that is not roughened include a rolled metallic foil, etc.

### [Negative Electrode Active Material Layer]

The negative electrode active material layer 12 may contain multiple types of negative electrode active materials, such as a carbon-based active material, besides the silicon-based active material particles. Depending on battery design, other materials may be further contained, such as a thickener (also referred to as a "binding agent" or "binder"), a conductive assistant agent, etc. Additionally, the form of the negative electrode active material may be particle-shaped.

Further, the inventive negative electrode active material contains silicon-based active material particles of SiOₓ (0.5≤x≤1.6) as described above. These silicon-based active material particles are silicon oxide material (SiOₓ: 0.5≤x≤1.6), and in a composition thereof, "x" is preferably close to 1 because higher cycle characteristics are obtained. Note that the composition of the silicon oxide material of the present invention does not necessarily mean purity of 100%, and may contain a small quantity of impurity elements and Li.

Moreover, in the present invention, the lower the crystalline (crystalline of Si crystallite) of a silicon compound, the better. Specifically, when negative electrode active material is measured by the X-ray diffraction using Cu-Kα rays, a crystallite size attributable to a Si(220) crystal face obtained by the X-ray diffraction is preferably 5 nm or less. In addition, a half-value width of a diffraction peak attributable to (220) crystal face obtained by the X-ray diffraction is preferably 1.5° or more. In particular, it is preferred that the diffraction peak is broad, and a definite peak is absent. In this way, the low crystalline and low Si crystal abundance, in particular, not only improves battery characteristics but also allows for a stable formation of Li compound.

The crystallite size attributable to this Si(220) crystal face can be calculated by an XRD peak analysis. The calculation of the crystallite size by XRD can be performed under, for example, the following conditions. In the case of the broad peak, an analysis software TOPAS can be used under, for example, the following conditions.

### XRD Measurement

· Apparatus: D2 PHASER manufactured by Bruker Corporation
· X-ray Source: Cu
· Divergence Slit: 0.5°
· Incident Side Soller: 4°
· Receiving Side Soller: 4°

### Calculation of Crystallite Size

· Analysis software: DIFFRAC.TOPAS
· Method of Analysis: Peak-fitting Method
· Emission Profile: CuKa5.lam
· Function: FP (First Principle) Function
· Refinement Option: " Calculate Error" and "Use Extrapolation" are selected.

Moreover, the median diameter of silicon compound particles is not particularly limited but, among them, is preferably 0.5 µm or more and 20 µm or less (based on volume). With this range, lithium ions are easily occluded and released in charging and discharging, and the silicon-based active material particles become less liable to break. When this median diameter is 0.5 µm or more, the surface area is not too large; thus, a side reaction hardly occurs in charging or discharging, and the irreversible battery capacity can be reduced. Meanwhile, the median diameter of 20 µm or less is preferable, because the silicon-based active material particles are less liable to break, and a newly formed surface is less likely to appear.

Furthermore, in the present invention, the silicon-based active material may be present as Li₂SiO₃ as well as Li₄SiO₄ or Li₆Si₂O₇ as the Li compound contained in the silicon compound. Li silicates such as Li₂SiO₃ as well as Li₄SiO₄ or Li₆Si₂O₇ are relatively more stable than other Li compounds, and thus, the silicon-based active materials containing these Li compounds can obtain more stable battery characteristics. These Li compounds can be obtained by selectively changing a part of SiO₂ components generated within the silicon compounds to the Li compounds, and by modifying the silicon compounds.

The Li compounds within the negative electrode active material particles and the silicon compound particles can be quantified by NMR (Nuclear Magnetic Resonance). The NMR measurement can be performed under the following conditions, for example. ²⁹Si MAS NMR (Magic Angle Spinning-Nuclear Magnetic Resonance)
· Apparatus: 700-NMR spectroscope manufactured by Bruker Corporation,
· Probe: 4-mm HR-MAS rotor 50 µL,
· Sample Spinning Speed: 10 kHz,
· Measurement Environment Temperature: 25°C

Moreover, in the present invention, when the silicon compound is modified, methods such as an electrochemical method, and a modification by a redox reaction can be used. In particular, when the silicon compound is modified using the modification by the electrochemical method, and the redox, the battery characteristics of the negative electrode active material are improved. In the modification, not only the insertion of Li into the silicon compound but also the stabilization of the Li compound by heat treatment and release of Li from the silicon compound may be performed together. As a result, stability to a slurry, such as water resistance of the negative electrode active material, is further improved. Moreover, the modification of the silicon compound may be combined with a physical method such as thermal doping. However, in the inventive negative electrode active material, an amount of the carbon-coating on the negative electrode active material particles relative to a total amount of the silicon compound particles and the carbon coating needs to be larger than 0 mass% and 1 mass% or less. Moreover, the carbon coating needs to contain a coating composed of at least any one of a compound having O-C=O bond and a compound having C-C bond.

Furthermore, in the inventive negative electrode active material, the silicon compound preferably has a peak attributable to a low valence region of the silicon oxide given around a region of -60 ppm or more and less than -30 ppm, a peak attributable to Li₆Si₂O₇ region given around a region of -70 ppm or more and less than - 60 ppm, and a peak attributable to Li₂SiO₃ region given a region around -70 ppm or more and less than -60 ppm, as chemical shift values obtained from ²⁹Si-MAS-NMR spectrum. In this way, making the Li silicate by modification further improves the stability against the slurry.

Moreover, in the present invention as described above, the silicon compound particles in silicon-based active material particles contain carbon coating on at least part of a surface, thereby obtaining appropriate electric conductivity.

In addition, in the inventive negative electrode active material, the negative electrode active material preferably has an intensity ratio of 0≤Ia/Ib≤3.0 where an intensity Ia around 290 eV is attributable to the O-C=O bond and an intensity Ib around 285 eV is attributable to the C-C bond both obtained by an X-ray photoelectron spectroscopy (XPS). When Ia/Ib is in this range, the binding property of a binder during preparation of the aqueous slurry is improved, resulting in improved battery characteristics. When Ia/Ib is 0 or more, compatibility with the slurry is better, and the dispersibility of the slurry is improved, as a result, the battery characteristics are improved. On the other hand, when Ia/Ib is 3.0 or less, the side reaction on the surface of the active material during charging or discharging is suppressed, thereby improving the battery characteristics.

Furthermore, it is preferred that the inventive negative electrode active material satisfies 1≤Ie/Ic≤18.5 with an intensity Ie around 2θ=18.7° attributable to Li₂SiO₃ compared to an intensity Ic around 2θ=47.5° attributable to Si, as obtained by an X-ray diffraction. When the intensity ratio Ie/Ic is 18.5 or less, generation of gas in the aqueous slurry can be suppressed, and stability of the slurry is easily secured. On the other hand, when the intensity ratio Ie/Ic is 1 or more, doped Li is more stabilized and the generation of gas in the aqueous slurry can be suppressed.

Moreover, it is preferred that a peak around 2θ=18.7° attributable to Li₂SiO₃ obtained by the X-ray diffraction of the negative electrode active material has a half-value width of 0.5° or more and 3.0° or less. Thus, the elution of alkali components into the aqueous slurry can be suppressed, thereby obtaining the better battery characteristics.

Moreover, it is preferred that the inventive negative electrode active material has at least one or more peaks in at least one region given as chemical shift values of a region of -80 ppm or more and less than -70 ppm, a region of -70 ppm or more and less than -60 ppm, and a region of -60 ppm or more and less than - 30 ppm, which are obtained from the ²⁹Si-MAS-NMR spectrum of the negative electrode active material.

As the chemical shift values, the peak around -60 ppm or more and less than -30 ppm is attributable to low-valent silicon oxide, the peak around -70 ppm or more and less than -60 ppm is attributable to Li₆Si₂O₇ components, the peak around -80 ppm or more and less than -70 ppm is attributable to Li₂SiO₃ components. Accordingly, by having at least one or more peaks in at least one of the above regions, the elution of alkali components into the aqueous slurry can be suppressed, thereby obtaining the better battery characteristics. Note that the peak attributable to Li₆Si₂O₇ components may be present as the peak around the region of -70 ppm or more and less than -60 ppm, but substantial absence is more preferable. That is, the presence of at least one of the peaks around -60 ppm or more and less than - 30 ppm and the peak around -80 ppm or more and less than -70 ppm is more preferable to the presence of the peak around the region of -70 ppm or more and less than -60 ppm.

In this case, it is preferred that peak intensity ratios If/Ii and Ih/Ii obtained from the ²⁹Si-MAS-NMR spectrum of the negative electrode active material satisfy both 0≤If/Ii≤0.23 and 0≤Ih/Ii≤1.1, where If represents a peak intensity of the peak obtained as the chemical shift value in the region of -60 ppm or more and less than -30 ppm, Ih represents a peak intensity of the peak obtained as the chemical shift value in the region of -70 ppm or more and less than -60 ppm, and Ii represents a peak intensity of the peak obtained as the chemical shift value in the region of -80 ppm or more and less than -70 ppm.

Silicon-based compound particles having such NMR peaks can suppress the elution of the alkali components into the aqueous slurry, thereby obtaining the better battery characteristics. Note that, as described above, the peak around the region of -70 ppm or more and less than -60 ppm is attributable to the Li₆Si₂O₇ components; the absence of this peak is substantially preferable, and Ih/Ii=0 is more preferable.

Moreover, in the inventive negative electrode active material for a non-aqueous electrolyte secondary battery, it is preferred that an intensity ratio Id/Ig of a D band and a G band in Raman spectrometry of the negative electrode active material is 0≤Id/Ig≤2.0. In this way, when 0≤Id/Ig≤2.0, exfoliation of the carbon coating or a side reaction on a carbon surface due to expansion and shrinkage can be suppressed, thereby obtaining the better battery characteristics.

Furthermore, it is preferred that an intensity ratio ISi/Ig of a peak intensity of Si and a G band in Raman spectrometry of the negative electrode active material is 0≤ISi/Ig≤5.0. In this way, when 0≤ISi/Ig≤5.0, it is possible to delay the generation of gas in the aqueous slurry while suppressing exposure of a surface of the silicon-based compound particles, resulting in obtaining the better battery characteristics.

Moreover, it is possible that the negative electrode active material particles either do not contain Li₂CO₃; or a portion of an outermost surface of the particle is coated with crystalline Li₂CO₃, in addition, the negative electrode active material satisfies 0≤Ij/Ic≤10 with a peak intensity Ij around 2θ=21° attributable to Li₂CO₃, compared to an intensity Ic around 2θ=47.5° attributable to Si, as obtained by the X-ray diffraction.

When ionic substances of the crystalline Li₂CO₃ are contained on the outermost surface of the negative electrode active material particles, the binding property of the binder during the preparation of the aqueous slurry is improved. When Ij/Ic≤10, the pH of the slurry can be made within an appropriate range during the preparation of the aqueous slurry, thus preventing gas generation and viscosity reduction of the slurry. Moreover, from the viewpoints of both the improvement of a binding property of a binder and pH increase, it is preferred that the crystalline Li₂CO₃ is substantially not contained.

Moreover, the inventive negative electrode active material for a non-aqueous electrolyte secondary battery can be coated with a carbon layer that is different from the carbon coating.

Moreover, in the inventive negative electrode active material for a non-aqueous electrolyte secondary battery, it is preferred that the negative electrode active material is coated with the carbon coating which has a peak attributable to the G band in Raman spectrometry of the negative electrode active material in a range of 1588 cm⁻¹ to 1598 cm⁻¹. In this way, by coating the outermost surface of the silicon compound with the carbon coating which has a peak attributable to the G band in Raman spectrometry in a range of 1588 cm⁻¹ to 1598 cm⁻¹, excellent electric conductivity can be secured, thereby obtaining the better battery characteristics.

### [Method for Producing Negative Electrode]

Next, an example of a method for producing a negative electrode of an inventive non-aqueous electrolyte secondary battery is described.

First, a method for producing a negative electrode material contained in a negative electrode is described.

To begin with, silicon compound particles containing a silicon compound (SiOₓ: 0.5≤x≤1.6) are prepared. Next, Li is inserted into these silicon compound particles to produce Li₂SiO₃ as a Li compound. In the present invention, the step of coating is further included in which at least part of the silicon compound particles is coated with carbon coating either simultaneously with or following the step of inserting Li into the silicon compound particles. In this case, the negative electrode active material particles are carbon-coated so as to make an amount of carbon coating larger than 0 mass% and 1 mass% or less relative to a total amount of the silicon compound particles and a carbon coating. In addition, the carbon coating is performed so as to make the coating composed of at least any one of a compound having O-C=O bond and a compound having C-C bond.

More specifically, the negative electrode active material is produced by following procedures, for example.

First, a raw material that generates a silicon oxide gas is heated in the temperature range of 900°C to 1600°C under the presence of an inert gas or under reduced pressure to generate the silicon oxide gas. In this case, as the raw material, a mixture of a metallic silicon powder and a silicon dioxide powder is used, and when considering the presence of surface oxygen of the metallic silicon powder and a slight amount of oxygen in a reaction furnace, a mixing mole ratio is desirable to be in the range of 0.8<metallic silicon powder/silicon dioxide powder<1.3. A Si crystallite in the particles is controlled by changing a feeding range or a vaporizing temperature, or by a heat treatment after the generation. A gas generated is deposited on an absorption plate. A deposit is taken out in a state where the temperature in the reaction furnace is lowered to 100°C or lower, followed by pulverizing and powdering using a ball mill or a jet mill.

Next, Li is inserted into the silicon active material particles prepared as described above to produce Li₂SiO₃ as a Li compound. In this case, one or more of Li₆Si₂O₇ and Li₄SiO₄ may be contained in addition to Li₂SiO₃. The insertion of Li is preferably performed by an electrochemical method or a redox method.

In the modification by the electrochemical method, an apparatus structure is not particularly limited, but, for example, a bulk modification apparatus 20 shown in FIG. 2 can be used to perform the bulk modification. The bulk modification apparatus 20 has: a bath 27 filled with an organic solvent 23; a positive electrode (lithium source, modification source) 21 disposed in the bath 27 and connected to one terminal of a power source 26; a powder storage container 25 disposed in the bath 27 and connected to the other terminal of the power source 26; and a separator 24 provided between the positive electrode 21 and the powder storage container 25. A silicon oxide powder 22 is stored in the powder storage container 25. After the silicon compound (silicon oxide particles) is stored in the powder storage container, the power source applies voltage between the powder storage container storing the silicon oxide particles and the positive electrode (lithium source). Thereby, lithium can be inserted into or released from the silicon compound particles; thus, the silicon oxide powder 22 can be modified. Heat treatment of the resulting silicon oxide at 400 to 800°C can stabilize the Li compound.

As the organic solvent 23 in the bath 27, it is possible to use ethylene carbonate, propylene carbonate, dimethyl carbonate, diethyl carbonate, ethylmethyl carbonate, fluoromethylmethyl carbonate, difluoromethylmethyl carbonate, etc. Moreover, as an electrolyte salt contained in the organic solvent 23, it is possible to use lithium hexafluorophosphate (LiPF₆), lithium tetrafluoroborate (LiBF₄), etc.

As the positive electrode 21, a Li foil or a Li-containing compound may be used. Examples of the Li-containing compounds include lithium carbonate, lithium oxide, lithium cobalt oxide, olivine iron lithium, lithium nickel oxide, lithium vanadium phosphate, etc.

After the electrochemical Li-doping modification, washing may be performed with alkaline water in which lithium carbonate, lithium oxide, or lithium hydroxide is dissolved, alcohol, weak acid, pure water, or the like. The washing allows elution of extra alkali components and improves the slurry stability.

In the modification by the redox method, for example, first, lithium is dissolved in an ether-based solvent to prepare a solution A. The silicon active material particles are immersed in the solution A; thus, lithium can be inserted. This solution A may further contain a polycyclic aromatic compound or a linear polyphenylene compound. The Li compound can be stabilized by heat treating the resulting silicon oxide at 400 to 800°C. Additionally, after the lithium insertion, the silicon active material particles may be immersed in a solution B containing the polycyclic aromatic compound, the linear polyphenylene compound or a derivative thereof to release active lithium from the silicon active material particles. As a solvent of the solution B, for example, an ether-based solvent, a ketone-based solvent, an ester-based solvent, an alcohol-based solvent, an amine-based solvent, or a mixed solvent thereof can be used. Washing may be performed with alkaline water in which lithium carbonate, lithium oxide, or lithium hydroxide is dissolved, alcohol, weak acid, pure water, or the like. The washing allows elution of extra alkali components and improves the slurry stability.

As the ether-based solvent used in the solution A, it is possible to use diethyl ether, tert-butyl methyl ether, tetrahydrofuran, dioxane, 1,2-dimethoxy ethane, diethylene glycol dimethyl ether, triethylene glycol dimethyl ether, tetraethylene glycol dimethyl ether, mixed solvents thereof, etc. Among these, tetrahydrofuran, dioxane, 1,2-dimethoxy ethane, and diethylene glycol dimethyl ether are preferably used. These solvents are preferably dehydrated, and preferably deoxygenized.

Moreover, as the polycyclic aromatic compound contained in the solution A, it is possible to use one or more of naphthalene, anthracene, phenanthrene, naphthalene, pentacene, pyrene, triphenylene, coronene, chrysene, and derivatives thereof. As the linear polyphenylene compound, it is possible to use one or more of biphenyl, terphenyl, and derivatives thereof.

As the polycyclic aromatic compound contained in the solution B, it is possible to use one or more of naphthalene, anthracene, phenanthrene, naphthalene, pentacene, pyrene, triphenylene, coronene, chrysene, and derivatives thereof.

Moreover, as the ether-based solvent of the solution B, it is possible to use diethyl ether, tert-butyl methyl ether, tetrahydrofuran, dioxane, 1,2-dimethoxy ethane, diethylene glycol dimethyl ether, triethylene glycol dimethyl ether, tetraethylene glycol dimethyl ether, mixed solvents thereof, etc.

As the ketone-based solvent, it is possible to use acetone, acetophenine, etc.

As the ester-based solvent, it is possible to use methyl formate, methyl acetate, ethyl acetate, propyl acetate, isopropyl acetate, etc.

As the alcohol-based solvent, it is possible to use methanol, ethanol, propanol, isopropyl alcohol, etc.

As the amine-based solvent, it is possible to use methylamine, ethylamine, ethylenediamine, etc.

When the above Li-doping is performed by the electrochemical method or the redox reaction, a coating derived from carbon components contained in the reaction solution is formed. This coating can be the coating composed of at least any one of the compound having O-C=O bond and the compound having C-C bond. Moreover, after Li-doping by the above electrochemical method or the redox reaction, the coating can also be made to the coating composed of at least any one of the compound having O-C=O bond and the compound having C-C bond by heat treatment.

Furthermore, when the coating composed of at least any one of the compounds having O-C=O bond and the compound having C-C bond, which is essential to the inventive negative electrode active material, is formed in conjunction with Li-doping by, for example, the electrochemical method or the redox reaction described above, the Li-doping can also be performed by inserting Li into the negative electrode active material particles using a thermal doping method in addition to the above methods. In this case, the modification is possible, for example, by mixing the negative electrode active material particles with a LiH powder or a Li powder, followed by heating under a non-oxidizing atmosphere. As the non-oxidizing atmosphere, for example, Ar atmosphere or the like can be employed. More specifically, first, under Ar atmosphere, the LiH powder or the Li powder is sufficiently mixed with the silicon oxide powder, and sealed. The whole sealed vessel is stirred to make the mixture uniform. Then, the mixture is heated in a range of 700°C to 750°C to perform the modification. In this event, in order to release Li from the silicon compound, the heated powder may be sufficiently cooled and then washed with alkaline water in which lithium carbonate, lithium oxide, or lithium hydroxide is dissolved, alcohol, weak acid, pure water, or the like. The washing allows elution of extra alkali components and improves the slurry stability.

Alternatively, a carbon layer (also referred to as "second carbon layer") that differs from the carbon coating described above may be formed on a surface layer of the powder material obtained after inserting the lithium. This carbon layer is effective to further improve battery characteristics of the negative electrode active material.

As a method for forming the carbon layer (second carbon layer) on the surface layer of the powder material, a thermal decomposition CVD is desirable. In the thermal decomposition CVD, the silicon oxide powder is placed in a furnace, and the furnace is filled with hydrocarbon gas and then a temperature in the furnace is raised. A decomposition temperature is not limited, in particular, 1000°C or less is desired. The temperature of 950°C is more desirable because an unintended disproportionation of the silicon oxide can be suppressed. The hydrocarbon gas is not particularly limited but 2≥n in a CₙHₘ composition is desired. This is because of a low production cost and favorable physical properties of decomposition products.

### <Aqueous Negative Electrode Slurry Composition >

An aqueous negative electrode slurry composition can be obtained by mixing the negative electrode active material prepared as described above with other materials, as necessary, such as a negative electrode binding agent and a conductive assistant agent; and then adding water (an organic solvent or the like can also be added in addition to water). The use of such an aqueous negative electrode slurry composition for producing the negative electrode allows for making a secondary battery with having large capacity and excellent initial charge-discharge characteristics.

Next, the aqueous negative electrode slurry composition described above is applied onto the surface of a negative electrode current collector and dried to form a negative electrode active material layer. In this event, heat pressing and the like may be performed, as necessary. As described above, a negative electrode is successfully produced.

### <Lithium-ion Secondary Battery>

Next, a lithium-ion secondary battery of a laminate film type will be described as a concrete example of the inventive non-aqueous electrolyte secondary battery described above.

### [Configuration of Laminate Film Type Secondary Battery]

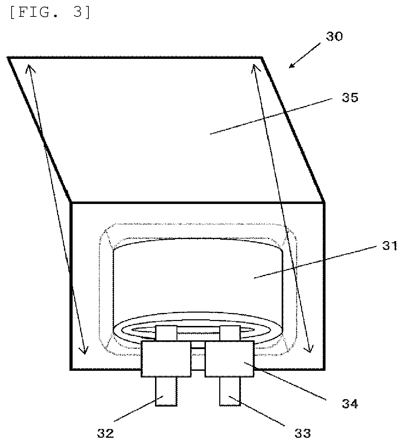

A laminate film type lithium-ion secondary battery 30 shown in FIG. 3 mainly includes a wound electrode body 31 stored in a sheet-shaped exterior member 35. This wound electrode body 31 is formed by winding a positive electrode, a negative electrode, and a separator disposed between these electrodes. There is also a case storing a laminate having a separator disposed between a positive electrode and a negative electrode without winding. The electrode bodies of both types have a positive-electrode lead 32 attached to the positive electrode and a negative-electrode lead 33 attached to the negative electrode. The outermost circumference of the electrode bodies is protected by a protecting tape.

The positive-electrode leads 32 and the negative-electrode 33, for example, extend from the interior of the exterior member 35 toward the exterior in one direction. The positive-electrode lead 32 is made of, for example, a conductive material, such as aluminum, and the negative-electrode lead 33 is made of, for example, a conductive material, such as nickel or copper.

The exterior member 35 is, for example, a laminate film having a fusion-bond layer, a metallic layer, and a surface protecting layer laminated in this order. The laminate films are fusion-bonded or stuck with an adhesive or the like at the outer edges therebetween of the fusion-bond layers of two films such that each fusion-bond layer faces the electrode body 31. The fusion-bond portion is, for example, a film, such as a polyethylene or polypropylene film. The metallic portion is aluminum foil, etc. The protecting layer is, for example, nylon, etc.

In the space between the exterior member 35 and the positive and negative electrode leads, a close adhesion film 34 is inserted to prevent air from entering therein. Exemplary materials of the close adhesion film include polyethylene, polypropylene, and polyolefin resins.

The positive electrode has a positive electrode active material layer disposed on one side or both sides of a positive electrode current collector like the negative electrode 10 shown in FIG. 1, for example.

The positive electrode current collector is made of, for example, a conductive material, such as aluminum.

The positive electrode active material layer contains any one or more positive electrode materials, in which lithium ions can be occluded and released, and may contain other materials such as a positive electrode binding agent, positive electrode conductive assistant agent, or dispersant depending on a design. In this case, the details of the positive electrode binding agent and the positive electrode conductive assistant agent are the same as those of the negative electrode binding agent and the negative electrode conductive assistant agent, which has been already described, for example.

The positive electrode material is desirably a compound containing lithium. Examples of lithium-containing compounds include complex oxides composed of lithium and a transition metal element, or phosphate compounds containing lithium and a transition metal element. Among these positive electrode materials, a compound containing at least one of nickel, iron, manganese, and cobalt is preferable. The chemical formula of such compounds is expressed by, for example, LiₓM₁O₂ or Li_{y}M₂PO₄. In the formulae, M₁ and M₂ represent at least one of the transition metal elements. "x" and "y" represent a value varied depending on a charging or discharging status of a battery, which is typically shown as 0.05≤x≤1.10 and 0.05≤y≤1.10.

Examples of the complex oxides containing lithium and a transition metal element include a lithium cobalt complex oxide (LiₓCoO₂), a lithium nickel complex oxide (LiₓNiO₂), a lithium-nickel-cobalt complex oxide, etc. Examples of the lithium-nickel-cobalt complex oxide include lithium-nickel-cobalt-aluminum complex oxide (NCA), lithium-nickel-cobalt-manganese complex oxide (NCM), etc.

Examples of the phosphate compounds containing lithium and a transition metal element include a lithium-iron-phosphate compound (LiFePO₄), a lithium-iron-manganese-phosphate compound (LIfe₁₋ᵤMnᵤPO₄ (0<u<1), etc. Not only higher battery capacity, but also excellent cycle characteristics can be obtained by using these positive electrode materials.

### [Negative Electrode]

The negative electrode has a configuration that is similar to that of the above negative electrode 10 for a lithium-ion secondary battery shown in FIG. 1, and, for example, has the negative electrode active material layers disposed on both faces of the current collector. This negative electrode preferably has a negative-electrode charge capacity larger than an electrical capacitance (battery charge capacity) provided by the positive electrode active material agent. Consequently, precipitation of lithium metal can be suppressed on the negative electrode.

The positive electrode active material layer is provided partially on both surfaces of the positive electrode current collector. Similarly, the negative electrode active material layer is also provided partially on both surfaces of the negative electrode current collector. In this case, the negative electrode active material layer provided on the negative electrode current collector, for example, has a region that does not face any positive electrode active material layer. This intends to perform a stable battery design.

The region described above, where the negative electrode active material layer and positive electrode active material layer do not face one another, is hardly affected by charging and discharging. The state of the negative electrode active material layer is consequently retained immediately after forming intact. This enables reproducibly high-precision investigation of, for example, the composition of negative electrode active material without relying on presence or absence of charging and discharging.

### [Separator]

The separator separates the positive electrode and the negative electrode, prevents current short-circuit due to contact between these electrodes, and passes lithium ions therethrough. This separator may be made of, for example, a porous film of synthetic resin or ceramic or two or more laminated porous films to have a laminate structure. Examples of synthetic resin include polytetrafluoroethylene, polypropylene, polyethylene, etc.

### [Electrolytic Solution]

At least a part of the active material layers or the separator is impregnated with an electrolyte in liquid form (electrolytic solution). This electrolytic solution includes electrolyte salt dissolved in a solvent and may contain other materials such as additives.

The solvent to be used can be, for example, a non-aqueous solvent. Examples of the non-aqueous solvents include ethylene carbonate, propylene carbonate, butylene carbonate, dimethyl carbonate, diethyl carbonate, ethylmethyl carbonate, methylpropyl carbonate, 1,2-dimethoxyethane, tetrahydrofuran, etc. Among these, at least one or more ethylene carbonate, propylene carbonate, dimethyl carbonate, diethyl carbonate, or ethylmethyl carbonate are desirably used because such solvents enable better characteristics. In this case, superior characteristics can be obtained by combined use of a high-viscosity solvent, such as ethylene carbonate or propylene carbonate, and a low-viscosity solvent, such as dimethyl carbonate, ethylmethyl carbonate, or diethyl carbonate. This results from the improvement of the dissociation of the electrolyte salt and ionic mobility.

The solvent additive preferably contains an unsaturated carbon bond cyclic carbonic ester because this enables the formation of a stable coating on the negative electrode surface at charging and discharging and the suppression of a decomposition reaction of the electrolytic solution. Examples of the unsaturated carbon bond cyclic carbonic esters include vinylene carbonate, vinyl ethylene carbonate, etc.

In addition, the solvent additive preferably contains sultone (cyclic sulfonic acid ester) because this improves chemical stability of a battery. Examples of the sultone include propane sultone and propene sultone.

In addition, the solvent preferably contains acid anhydride because this improves chemical stability of the electrolytic solution. An example of the acid anhydride includes propane disulfonic acid anhydride.

The electrolyte salt can contain, for example, any one or more light metal salts, such as lithium salt. Examples of the lithium salt can include lithium hexafluorophosphate (LiPF₆), lithium tetrafluoroborate (LiBF₄), etc.

The content of the electrolyte salt relative to the solvent is preferably 0.5 mol/kg or more and 2.5 mol/kg or less. This is because high ionic conductivity is obtained.

### [Method of Producing Laminate Film Type Secondary Battery]

In the beginning, a positive electrode is produced with the above positive electrode material. A positive electrode mixture is first created by mixing the positive electrode active material with as necessary the positive electrode binding agent, the positive electrode conductive assistant agent, and other materials, and then dispersed in an organic solvent to form slurry of the positive-electrode mixture. Subsequently, the mixture slurry is applied to a positive electrode current collector with a coating apparatus such as a die coater having a knife roll or a die head and dried by hot air to obtain a positive electrode active material layer. The positive electrode active material layer is finally compression molded with, for example, a roll press. In this event, heating may be performed, and the compression may be repeated multiple times.

Next, a negative electrode active material layer is formed on a negative electrode current collector to produce a negative electrode through the same procedure as in the above production of the negative electrode 10 for a lithium-ion secondary battery.

In producing the positive electrode and the negative electrode, the active material layers are formed on both surfaces of each of the positive and the negative electrode current collectors, respectively. For each electrode, the active materials applied to both sides of the current collector may have different lengths (see FIG. 1).

Then, an electrolytic solution is prepared. Subsequently, with ultrasonic welding or the like, a positive electrode lead 32 is attached to the positive electrode current collector, and a negative electrode lead 33 is attached to the negative electrode current collector. Then, the positive electrode and the negative electrode, in which the separator is interposed therebetween, are stacked or wound to produce a wound electrode body 31, and a protecting tape is stuck to the outermost circumference of the body. Next, the wound body is formed so as to become a flattened shape. Subsequently, the wound electrode body is interposed in the folded film-shaped exterior member 35. Then, the insulating portions of the exterior member are stuck to one another by heat sealing, thereby the wound electrode body is encapsulated with one direction being opened. Thereafter, the close-adhesion films are inserted between the exterior member, the positive electrode lead, and the negative electrode lead. Then, the prepared electrolytic solution is introduced in a predetermined amount from the opened side to perform vacuum impregnating. After the impregnation, the opened side is stuck by a vacuum heat sealing method. In this manner, the laminate film type secondary battery 30 is successfully produced.

In the inventive non-aqueous electrolyte secondary battery, such as the laminate film type secondary battery 30 produced as described above, it is preferred that a negative-electrode utilization ratio is 93 % or more and 99 % or less at charging and discharging. With the negative-electrode utilization ratio in the range of 93% or more, a first-time charge efficiency is not lowered, and battery capacity can be greatly improved. Meanwhile, with the negative-electrode utilization ratio in the range of 99% or less, Li is not precipitated, and safety can be guaranteed.

### EXAMPLE

Hereinafter, the present invention will be more specifically described by showing Examples of the present invention and Comparative Examples. However, the present invention is not limited to these Examples.

### (Example 1-1)

The laminate film type secondary battery 30 shown in FIG. 3 was produced by the following procedure.

First, a positive electrode was produced. A positive-electrode mixture was prepared by mixing 95 parts by mass of lithium-nickel-cobalt-aluminum complex oxide (LiNi_{0.7}CO_{0.25}Al_{0.05}O), 2.5 parts by mass of a positive electrode conductive assistant agent (acetylene black), and 2.5 parts by mass of a positive electrode binding agent (polyvinylidene fluoride: PVDF) as a positive electrode active material. Then, the positive electrode mixture was dispersed in an organic solvent (N-methyl-2-pyrrolidone: NMP) to form a paste slurry. The slurry was subsequently applied to both surfaces of a positive electrode current collector with a coating apparatus having a die head and dried with a hot air type drying apparatus. In this case, the positive electrode current collector used here had a thickness of 15 µm. The resultant was finally compression molded with a roll press.

Next, a negative electrode was produced. In the beginning, a silicon-based active material was produced as follows. A mixed raw material of metallic silicon and silicon dioxide (evaporative starting material) was placed in a reaction furnace and evaporated in an atmosphere with a vacuum degree of 10 Pa to deposit the evaporated material on an adsorption plate. After sufficient cooling, the deposit was taken out and pulverized with a ball mill. Subsequently, lithium was inserted into the silicon compound particles by a redox method to modify the silicon compound. At first, the negative electrode active material particles were immersed into a solution (solution A) in which a lithium piece and naphthalene, being an aromatic compound, were dissolved in tetrahydrofuran (hereinafter referred to as THF). This solution A was prepared by: dissolving naphthalene in a THF solvent at a concentration of 0.2 mol/L; and then adding a lithium piece whose mass was 12 mass% of this mixture solution of THF and naphthalene. Additionally, when the negative electrode active material particles were immersed, the solution temperature was 20°C, and the immersion time was 20 hours. Thereafter, the negative electrode active material particles were collected by filtration. By the above-described treatment, lithium was inserted in the negative electrode active material particles.

The silicon compound particles obtained were heat-treated under an argon atmosphere at 650°C or lower for 24 hours to stabilize a Li compound.

In this way, the negative electrode active material particles (silicon-based active material particles) were modified. After the modification, the particles were washed with a solvent. By the above-described treatment, negative electrode active material particles were prepared.

The obtained negative electrode active material particles were subjected to XRD measurement, ²⁹Si-NMR measurement, Raman spectrometry, and particle size distribution measurement.

The silicon-based active material prepared as described above was blended with a carbon-based active material in a mass ratio of 2:8 to prepare a negative electrode active material. The carbon-based active material used herein was a mixture in which artificial graphite and natural graphite coated with a pitch layer were mixed in a mass ratio of 5:5. Additionally, the carbon-based active material had a median diameter of 20 µm.

Next, the prepared negative electrode active material, a conductive assistant agent 1 (carbon nanotube, CNT), a conductive assistant agent 2 (carbon fine particles having a median diameter of about 50 nm), styrene-butadiene rubber (styrene-butadiene copolymer; hereinafter, referred to as SBR), and carboxymethyl cellulose (hereinafter, referred to as CMC) were mixed in a dry mass ratio of 92.5:1:1:2.5:3. This was then diluted with pure water to form negative electrode mixture slurry. Incidentally, the foregoing SBR and CMC were negative electrode binders (negative electrode binding agents).

As a negative electrode current collector, an electrolytic copper foil (thickness: 15 µm) was used. Finally, the negative electrode mixture slurry was applied onto the negative electrode current collector and dried at 100°C for 1 hour in a vacuum atmosphere. After drying, the negative electrode had a deposited amount of a negative electrode active material layer per unit area at one side (also referred to as an area density) of 5 mg/cm².

Next, fluoroethylene carbonate (FEC), ethylene carbonate (EC), and diethyl carbonate (DEC) were mixed as a solvent, followed by dissolving electrolyte salt (lithium hexafluorophosphate: LiPF₆) to prepare an electrolytic solution. In this case, the solvent composition was set to FEC:EC:DEC=1:2:7 in a volume ratio, and the content of the electrolyte salt was set to 1.0 mol/kg based on the solvents. Further, vinylene carbonate (VC) was added in an amount of 1.5 mass% to the obtained electrolytic solution.

Then, a secondary battery was assembled as follows. First, an aluminum lead was attached to one end of the positive electrode current collector by ultrasonic welding, and a nickel lead was welded to the negative electrode current collector. Subsequently, the positive electrode, a separator, the negative electrode, and a separator were stacked in this order and wound in a longitudinal direction to produce a wound electrode body. The end of the winding portion was fixed with PET-protecting tape. The separator used herein was a 12 µm laminate film in which a film mainly composed of porous polypropylene was sandwiched by films mainly composed of porous polyethylene. Thereafter, an electrode body was put between exterior member, and then outer peripheries excluding one side were heat-sealed each other, and thereby, the electrode body was stored in the exterior member. As the exterior member, an aluminum laminate film was used in which a nylon film, an aluminum foil, and a polypropylene film were laminated. Then, the prepared electrolytic solution was introduced from the opening to perform the impregnation under a vacuum atmosphere. The opening was then sealed by heat sealing.

The cycle characteristics and first-time charge-discharge characteristics of the secondary battery produced as described above were evaluated.

The cycle characteristics were investigated in the following manner. First, two cycles of charging and discharging were performed at 0.2 C under an atmosphere of 25°C to stabilize the battery, and the discharge capacity in the second cycle was measured. Next, charging and discharging were repeated until the total number of cycles reached 299 cycles and the discharge capacity was measured every cycle. Finally, a capacity retention rate (hereinafter, also simply referred to as retention rate) was calculated by dividing the discharge capacity in the 300th cycle, which was obtained by charging and discharging at 0.2 C, by the discharge capacity in the second cycle. In the normal cycle, that is, in the cycles from the third cycle to the 299th cycle, the charging and discharging were performed at 0.7 C in charging and at 0.5 C in discharging.

In investigating the first-time charge-discharge characteristics, first-time efficiency (may also be referred to as initial efficiency) was calculated. The first-time efficiency was calculated from the equation shown by: first-time efficiency (%)=(first-time discharge capacity/first-time charge capacity)×100. The atmospheric temperature was the same as that in investigating the cycle characteristics. Additionally, this first-time efficiency was such a calculated efficiency that the discharge capacity reached 1.2 V.

### (Examples 1-2 and 1-3, Comparative Examples 1-1 and 1-2)

Secondary batteries were produced under the same conditions and each evaluation was performed as in Example 1-1 except that an amount of carbon coating was adjusted as shown in Table 1, by adjusting temperature and time conditions during washing with modified solvent. As results shown in Table 1, when a silicon compound represented by SiOx had the amount of carbon coating larger than 0 mass% and 1 mass% or less, excellent first-time efficiency and capacity retention rate were obtained. In Comparative Example 1-1 where an amount of carbon coating was 1.2 mass%, a decrease in the first-time efficiency and a decrease in capacity retention rate due to side reaction of the carbon coating were observed during charging and discharging. In Comparative Example 1-2 where an amount of carbon coating was 0 mass%, first-time efficiency and capacity retention rate were both poor due to lack of electric conductivity.

**[Table 1]**

| SiOx x=1, D50=7.4 µm, Ie/Ic=18.4 | | | | | |
|---|---|---|---|---|---|
| Li₂SiO₃ half-value width=1.3°, Si crystallite size=1.8 | | | | | |
| nm, Modification method: Redox method | | | | | |
| Table 1 | First-time efficiency | 300-cycle retention rate | Carbon coating [mass%] | Ia | Ib |
| Example 1-1 | 86.7% | 82.3% | 0.6 | Present | Present |
| Example 1-2 | 90.2% | 85.6% | 0.4 | Present | Present |
| Example 1-3 | 89.8% | 86.8% | 0.8 | Absent | Present |
| Comparative Example 1-1 | 78.2% | 74.2% | 1.2 | Present | Present |
| Comparative Example 1-2 | 60.3% | 54.1% | 0 | Absent | Absent |

### (Examples 2-1 to 2-4)

As shown in Table 2, an intensity ratio Ia/Ib in negative electrode active material particles was adjusted. This adjustment was enabled according to heat treatment conditions (temperature and pressure) after lithium insertion. Moreover, secondary batteries were produced under the same conditions and each evaluation was performed as in Example 1-1, and results thereof are shown in Table 2.

**[Table 2]**

| SiOx x=1, D50=7.4 µm, Ie/Ic=18.4 | | | | | | |
|---|---|---|---|---|---|---|
| Li₂SiO₃ half-value width=1.3°, Si crystallite size=1.8 | | | | | | |
| nm, Modification method: Redox method | | | | | | |
| Table 2 | First-time efficiency | 300-cycle retention rate | Carbon coating [mass%] | Ia | Ib | Ia/Ib O-C=O/C-C |
| Example 1-1 | 86.7% | 82.3% | 0.6 | Present | Present | 2.0 |
| Example 1-3 | 89. 8% | 86.8% | 0.8 | Absent | Present | 0.0 |
| Example 2-1 | 89. 8% | 86.9% | 0.7 | Present | Present | 0.8 |
| Example 2-2 | 87.4% | 84.2% | 0.7 | Present | Present | 1.2 |
| Example 2-3 | 86.5% | 82.1% | 0.5 | Present | Present | 3.0 |
| Example 2-4 | 86.4% | 81.9% | 0.5 | Present | Present | 3.2 |

As shown in Table 2, particularly excellent first-time efficiency and capacity retention rate were obtained in a range of 0≤Ia/Ib≤3.0. Since a side reaction caused by a carbon coating during charging was due to compounds having O-C=O bond, the side reaction was suppressed by not having excessive compounds with O-C=O bond, and both the first-time efficiency and capacity retention rate were improved. On the other hand, in Example 2-4 where Ia/Ib>3.0, a compound having O-C=O bond was increased, leading to an increased side reaction due to a carbon coating of a battery, resulting in a slight decrease of first-time efficiency and capacity retention rate. From the above, Ia/Ib is preferably in a range of 0≤Ia/Ib≤3.0.

### (Examples 3-1 to 3-7)

As shown in Table 3, XRD intensity ratio of Li₂SiO₃ as a Li compound was adjusted. The adjustment was enabled by adjusting an amount of Li being inserted. Moreover, secondary batteries were produced under the same conditions and each evaluation was performed as in Example 1-1, and results thereof are shown in Table 3.

**[Table 3]**

| SiOx x=1, D50=7.4 µm, Ia/Ib=2.0 | | | |
|---|---|---|---|
| Li₂SiO₃ half-value width=1.3°, Si crystallite size=1.8 | | | |
| nm, Modification method: Redox method | | | |
| Table 3 | First-time efficiency | 300-cycle retention rate | Ie/Ic (Li₂SiO₃/ Si) |
| Example 1-1 | 86.7% | 82.3% | 18.4 |
| Example 3-1 | 90.3% | 84.3% | 15.8 |
| Example 3-2 | 91.0% | 84.9% | 11.6 |
| Example 3-3 | 91.6% | 85.6% | 6.0 |
| Example 3-4 | 91.8% | 86.1% | 2.3 |
| Example 3-5 | 91.9% | 86.3% | 1.3 |
| Example 3-6 | 92.0% | 86.5% | 1.1 |
| Example 3-7 | 92.1% | 86.8% | 0.9 |

As shown in Table 3, lowering Ie/Ic resulted in improvement in both first-time efficiency and capacity retention rate. As the amount of inserted Li increased, the XRD intensity ratio of Li₂SiO₃ decreased, which is due to further modification of irreversible components in the silicon compound. On the other hand, although not shown in the Table, when the intensity ratio Ie/Ic was 1 or more, a doped Li was more stabilized and gas generation was successfully suppressed in an aqueous slurry, therefore it is preferred to make the intensity ratio Ie/Ic 1 or more.

### (Examples 4-1 to 4-6)

Next, as shown in Table 4, a half-value width of Li₂SiO₃ obtained from XRD spectrum was adjusted. The adjustment was enabled by adjusting an amount of contained Li. Moreover, secondary batteries were produced under the same conditions and each evaluation was performed as in Example 1-1, and results thereof are shown in Table 4.

**[Table 4]**

| SiOx x=1, D50=7.4 µm, Ia/Ib=2.0, Ie/Ic=18.4 | | | |
|---|---|---|---|
| Si crystallite size=1.8 nm | | | |
| Modification method: Redox method | | | |
| Table 4 | First-time efficiency | 300-cycle retention rate | Li₂SiO₃ half-value width [°] |
| Example 1-1 | 86.7% | 82.3% | 1.3 |
| Example 4-1 | 86.9% | 82.0% | 0.51 |
| Example 4-2 | 86.8% | 82.1% | 0.97 |
| Example 4-3 | 86.8% | 82.2% | 1.46 |
| Example 4-4 | 86.5% | 82.5% | 2.48 |
| Example 4-5 | 86.4% | 82.8% | 2.91 |
| Example 4-6 | 84.4% | 81.1% | 3.13 |

When a half-value width exceeded 3.0°, the amount of contained Li increased, causing the half-value width of Li₂SiO₃ to become broader. In this case, gas generation from slurry became significant, resulting in degradation of battery characteristics. The half-value width of Li₂SiO₃ is preferably 0.5° or more and 3.0° or less.

### (Examples 5-1 to 5-5)

Next, as shown in Table 5, a crystallite size on a Si(220) face was adjusted. The adjustment was enabled according to heat load of silicon oxide. Moreover, secondary batteries were produced under the same conditions and each evaluation was performed as in Example 1-1, and results thereof are shown in Table 5.

**[Table 5]**

| SiOx x=1, D50=7.4 µm, Ia/Ib=2.0, Ie/Ic=18.4 | | | |
|---|---|---|---|
| Li₂SiO₃ half-value width=1.3° | | | |
| Modification method: Redox method | | | |
| Table 5 | First-time efficiency | 300-cycle retention rate | Si crystallite size [nm] |
| Example 1-1 | 86.7% | 82.3% | 1.8 |
| Example 5-1 | 86.6% | 83.0% | 1.0 |
| Example 5-2 | 86.8% | 82.2% | 2.4 |
| Example 5-3 | 87.0% | 82.1% | 3.8 |
| Example 5-4 | 87.2% | 82.0% | 4.6 |
| Example 5-5 | 88.0% | 81.8% | 5.1 |

As shown in Table 5, capacity retention rate showed an excellent result when the crystallite size was in a range of 5 nm or less.

### (Examples 6-1 to 6-5)

Next, as shown in Table 6, If/Ii and Ih/Ii were adjusted. The adjustment was enabled according to heat treatment conditions of silicon oxide containing Li. Moreover, secondary batteries were produced under the same conditions and each evaluation was performed as in Example 1-1, and results thereof are shown in Table 6.

**[Table 6]**

| SiOx x=1, D50=7.4 µm, Ia/Ib=2.0, Ie/Ic=18.4 | | | | |
|---|---|---|---|---|
| Li₂SiO₃ half-value width =1.3°, Si crystallite size=1.8 | | | | |
| nm, Modification method: Redox method | | | | |
| Table 6 | First-time efficiency | 300-cycle retention rate | If/Ii (low-valent Si/Li₂SiO₃) | Ih/Ii (Li₆Si₂O₇/ Li₂SiO₃ |
| Example 1-1 | 86.7% | 82.3% | 0.05 | 0.07 |
| Example 6-1 | 86.7% | 82.3% | 0.08 | 0.24 |
| Example 6-2 | 86.8% | 82.2% | 0.11 | 0.39 |
| Example 6-3 | 86.8% | 82.2% | 0.16 | 0.66 |
| Example 6-4 | 87.0% | 82.2% | 0.22 | 1.05 |
| Example 6-5 | 85.8% | 81.8% | 0.24 | 1.12 |

As shown in Table 6, adhesion to a binder was slightly weakened due to If/Ii being 0.23 or less, Ih/Ii being 1.1, and sufficient stabilization of doped-Li, resulting in excellent battery characteristics.

### (Examples 7-1 to 7-8)

Next, as shown in Table 7, an intensity ratio Id/Ig of a D band and a G band, and an intensity ratio ISi/Ig of a peak intensity of Si and a G band in Raman spectrometry were adjusted. The adjustment was enabled according to conditions (conditions of temperature rise, temperature, pressure, gas flow rate) during thermal CVD. Moreover, secondary batteries were produced under the same conditions and each evaluation was performed as in Example 1-1, and results thereof are shown in Table 7.

**[Table 7]**

| SiOx x=1, D50=7.4 µm, Ia/Ib=2.0, Ie/Ic=18.4 | | | | |
|---|---|---|---|---|
| Li₂SiO₃ half-value width =1.3°, Si crystallite | | | | |
| size=1.8nm, If/Ii=0.05, Ih/Ii=0.07 | | | | |
| Modification method: Redox method | | | | |
| Table 7 | First-time efficiency | 300-cycle retention rate | Id/Ig | ISi/Ig |
| Example 1-1 | 86.7% | 82.3% | 0.0 | 1.9 |
| Example 7-1 | 86.6% | 82.0% | 0.5 | 2.4 |
| Example 7-2 | 86.4% | 81.8% | 1.1 | 3.3 |
| Example 7-3 | 86.2% | 81.6% | 1.6 | 4.1 |
| Example 7-4 | 86.0% | 81.4% | 1.9 | 4.8 |
| Example 7-5 | 85.7% | 80.8% | 2.3 | 5.1 |
| Example 7-6 | 86.9% | 82.5% | 0.5 | 1.1 |
| Example 7-7 | 87.0% | 82.8% | 0.3 | 0.4 |
| Example 7-8 | 87.2% | 83.0% | 0.2 | 0.0 |

As shown in Table 7, Id/Ig being 0 or more and 2.0 or less decreased diamond-structured carbon having no electric conductivity, resulting in excellent first-time efficiency and capacity retention rate. In addition, since a silicon compound was sufficiently coated in a range where ISi/Ig was 0 or more and 5 or less, electric conductivity was sufficiently secured, resulting in excellent first-time efficiency and capacity retention rate.

### (Examples 8-1 to 8-7)

Next, as shown in Table 8, D10 and D50 (median diameter) of silicon compound particles were varied. The adjustment was enabled according to a degree of pulverization and classification. Moreover, secondary batteries were produced under the same conditions and each evaluation was performed as in Example 1-1, and results thereof are shown in Table 8.

**[Table 8]**

| SiOx x=1, Ia/Ib=2.0, Ie/Ic=18.4 | | | | |
|---|---|---|---|---|
| Li₂SiO₃ half-value width =1.3°, Si crystallite size=1.8 nm, If/Ii=0.05, Ih/Ii=0.07 | | | | |
| Modification method: Redox method | | | | |
| Table 8 | First-time efficiency | 300-cycle retention rate | D10 [µm] | D50 [µm] |
| Example 1-1 | | 82.3% | 4.7 | 7.4 |
| Example 8-1 | 86.7% 90.4% | 84.3% | 5.7 | 9.4 |
| Example 8-2 | 83.2% | 80.7% | 0.1 | 0.4 |
| Example 8-3 | 85.9% | 81.6% | 2 | 3 |
| Example 8-4 | 86.3% | 82.0% | 4.6 | 6.5 |
| Example 8-5 | 90.4% | 85.4% | 9.4 | 13 |
| Example 8-6 | 90.3% | 86.2% | 11.2 | 15 |
| Example 8-7 | 90.3% | 86.4% | 15.6 | 20 |

As shown in Table 8, first-time efficiency and retention rate were further improved when a median diameter of the silicon compound was 0.5 µm or more and D10 was 2 µm or more. This was considered to be because a surface area per mass of the silicon compound particles was not too large, thus suppressing a side reaction. On the other hand, when the median diameter was 20 µm or less and D10 was 16 µm or less, the particles were less likely to crack during charging, and SEI (solid electrolyte interface) caused by a newly formed surface was less likely to be generated during charging or discharging, thereby suppressing the loss of reversible Li. Moreover, when the median diameter of the silicon compound particles was 20 µm or less, an amount of expansion of the silicon compound particles during charging was not too large, and a physical and electrical breakdown of the negative electrode active material layer due to expansion was preventable.

### (Examples 9-1 to 9-5)

Next, as shown in Table 9, Li₂CO₃ as a Li compound was adjusted. The adjustment of Li₂CO₃ was enabled by adjusting atmospheric exposure time. Moreover, secondary batteries were produced under the same conditions and each evaluation was performed as in Example 1-1, and results thereof are shown in Table 2.

**[Table 9]**

| SiOx x=1, D50=7.4 µm, Ia/Ib=2.0, Ie/Ic=18.4 | | | |
|---|---|---|---|
| Li₂SiO₃ half-value width =1.3°, Si crystallite size=1.8 | | | |
| nm, If/Ii=0.05, Ih/Ii=0.07 | | | |
| Modification method: Redox method | | | |
| Table 9 | First-time efficiency | 300-cycle retention rate | Ij/Ic (Li₂CO₃/Si) |
| Example 1-1 | 86.7% | 82.3% | 0.0 |
| Example 9-1 | 86.7% | 82.60% | 2.4 |
| Example 9-2 | 86.8% | 82.80% | 5.6 |
| Example 9-3 | 86.8% | 82.90% | 8.3 |
| Example 9-4 | 86.8% | 83.10% | 9.8 |
| Example 9-5 | 86.9% | 83.30% | 10.5 |

As shown in Table 9, when an intensity ratio Ij/Ic was 10 or less, first-time efficiency was excellent, and as a result, battery characteristics were also excellent.

### (Examples 10-1 to 10-8)

Next, as shown in Table 10, hydrocarbon gas was introduced during heat treatment after lithium insertion to form a carbon coating on a surface, and the carbon coatings that had different peak positions of G band peaks in Raman spectrometry were formed on the outermost surface of the silicon compound. The peaks of the G band were adjusted by heat treatment temperatures. Moreover, secondary batteries were produced under the same conditions and each evaluation was performed as in Example 1-1, and results thereof are shown in Table 10.

**[Table 10]**

| SiOx x=1, D50=7.4 µm, Ia/Ib=2.0, Ie/Ic=18.4 | | | |
|---|---|---|---|
| Li₂SiO₃ half-value width =1.3°, Si crystallite size=1.8 | | | |
| nm, If/Ii=0.05, Ih/Ii=0.07, Ij/Ie=0 | | | |
| Modification method: Redox method | | | |
| Table 10 | First-time efficiency | 300-cycle retention rate | Position of G band peak [cm⁻¹] |
| Example 1-1 | 86.7% | 82.3% | - |
| Example 10-1 | 92.5% | 80.9% | 1588 |
| Example 10-2 | 92.3% | 82.3% | 1590 |
| Example 10-3 | 91.8% | 82.6% | 1594 |
| Example 10-4 | 91.4% | 83.8% | 1595 |
| Example 10-5 | 91.2% | 84.5% | 1596 |
| Example 10-6 | 91.7% | 85.6% | 1597 |
| Example 10-7 | 90.7% | 85.8% | 1598 |
| Example 10-8 | 84.7% | 80.9% | 1600 |

As shown in Table 10, when the carbon coating having the G band peak in a range of 1588 cm⁻¹ to 1598 cm⁻¹ was present on the outermost surface of the silicon compound, electric conductivity was improved, and further, stability of the aqueous slurry was improved because suppression of pH rise in an aqueous slurry was enabled due to successfully suppressing an elution of Li from Li compound. The use of this slurry enabled obtaining excellent electrodes, as a result, excellent battery characteristics were successfully obtained. When the G-band peak was at 1600cm⁻¹, exceeding 1598cm⁻¹, stabilization of the Li compound was insufficient and the electric conductivity of the carbon coating formed was insufficient, resulting in slightly degraded battery characteristics.

The present description includes the following embodiments.
[1]: A negative electrode active material for a non-aqueous electrolyte secondary battery containing negative electrode active material particles in which the negative electrode active material particles comprise silicon compound particles containing a silicon compound (SiOₓ: 0.5≤x≤1.6), wherein
   the silicon compound particles are a negative electrode active material for a non-aqueous electrolyte secondary battery containing a Li compound,
   the negative electrode active material particles are at least partially coated with a carbon coating,
   an amount of the carbon coating on the negative electrode active material particles relative to a total amount of the silicon compound particles and the carbon coating is larger than 0 mass% and 1 mass% or less,
   the carbon coating contains a coating composed of at least any one of a compound having O-C=O bond and a compound having C-C bond, and
   the silicon compound particles contain crystalline Li₂SiO₃ as the Li compound.
[2]: The negative electrode active material for a non-aqueous electrolyte secondary battery according to the above [1], wherein
   the negative electrode active material has an intensity ratio of 0≤Ia/Ib≤3.0 where an intensity Ia around 290 eV is attributable to the O-C=O bond and an intensity Ib around 285 eV is attributable to the C-C bond both obtained by an X-ray photoelectron spectroscopy.
[3]: The negative electrode active material for a non-aqueous electrolyte secondary battery according to the above [1] or [2], wherein
   the negative electrode active material satisfies 1≤Ie/Ic≤18.5 with an intensity Ie around 2θ=18.7° attributable to Li₂SiO₃ compared to an intensity Ic around 2θ=47.5° attributable to Si, as obtained by an X-ray diffraction.
[4]: The negative electrode active material for a non-aqueous secondary battery according to any one of the above [1] to [3], wherein
   a peak around 2θ=18.7° attributable to Li₂SiO₃ obtained by the X-ray diffraction of the negative electrode active material has a half-value width of 0.5° or more and 3.0° or less.
[5]: The negative electrode active material for a non-aqueous secondary battery according to any one of the above [1] to [4], wherein
   a crystallite size attributable to a Si(220) crystal face obtained by the X-ray diffraction of the negative electrode active material is 5 nm or less.
[6]: The negative electrode active material for a non-aqueous secondary battery according to any one of the above [1] to [5], wherein
   the negative electrode active material has at least one or more peaks in at least one region given as chemical shift values of a region of -80 ppm or more and less than -70 ppm, a region of -70 ppm or more and less than -60 ppm, and a region of -60 ppm or more and less than -30 ppm, which are obtained from a ²⁹Si-MAS-NMR spectrum of the negative electrode active material.
[7]: The negative electrode active material for a non-aqueous secondary battery according to according to the above [6], wherein
   peak intensity ratios If/Ii and Ih/Ii obtained from the ²⁹Si-MAS-NMR spectrum of the negative electrode active material satisfy both 0≤If/Ii≤0.23 and 0≤Ih/Ii≤1.1, where
   If represents a peak intensity of the peak obtained as the chemical shift value in the region of -60 ppm or more and less than -30 ppm,
   Ih represents a peak intensity of the peak obtained as the chemical shift value in the region of -70 ppm or more and less than -60 ppm, and
   Ii represents a peak intensity of the peak obtained as the chemical shift value in the region of -80 ppm or more and less than -70 ppm.
[8]: The negative electrode active material for a non-aqueous electrolyte secondary battery according to any one of the above [1] to [7], wherein
   an intensity ratio Id/Ig of a D band and a G band in Raman spectrometry of the negative electrode active material is 0≤Id/Ig≤2.0.
[9]: The negative electrode active material for a non-aqueous electrolyte secondary battery according to any one of the above [1] to [8], wherein
   an intensity ratio ISi/Ig of a peak intensity of Si and a G band in Raman spectrometry of the negative electrode active material is 0≤ISi/Ig≤5.0.
[10]: The negative electrode active material for a non-aqueous electrolyte secondary battery according to any one of the above [1] to [9], wherein
   the silicon compound particles have a median diameter of 0.5 µm or more and 20 µm or less.
[11]: The negative electrode active material for a non-aqueous electrolyte secondary battery according to any one of the above [1] to [10], wherein
   the negative electrode active material particles either do not contain Li₂CO₃; or a portion of an outermost surface of the particle is coated with crystalline Li₂CO₃, in addition, the negative electrode active material satisfies 0≤Ij/Ic≤10 with a peak intensity Ij around 2θ=21° attributable to Li₂CO₃, compared to an intensity Ic around 2θ=47.5° attributable to Si, as obtained by the X-ray diffraction.
[12]: The negative electrode active material for a non-aqueous electrolyte secondary battery according to any one of [1] to [11], wherein
   the negative electrode active material is coated with a carbon layer that is different from the carbon coating.
[13]: The negative electrode active material for a non-aqueous electrolyte secondary battery according to any one of the above [1] to [12], wherein
   the negative electrode active material is coated with the carbon coating which has a peak attributable to the G band in Raman spectrometry of the negative electrode active material in a range of 1588 cm⁻¹ to 1598 cm⁻¹.
[14]: A non-aqueous electrolyte secondary battery comprising the negative electrode active material for a non-aqueous electrolyte secondary battery according to any one of [1] to [13].
[15]: A mobile terminal comprising the non-aqueous electrolyte secondary battery according to the above [14].
[16]: An electric vehicle comprising the non-aqueous electrolyte secondary battery according to the above [14].
[17]: A power storage system comprising the non-aqueous electrolyte secondary battery according to the above [14].
[18]: A method for producing a negative electrode active material for a non-aqueous electrolyte secondary battery containing negative electrode active material particles, the method comprising steps of:
   preparing silicon compound particles containing a silicon compound (SiOₓ: 0.5≤x≤1.6);
   inserting Li into the silicon compound particles to produce Li₂SiO₃ as a Li compound; and
   further coating at least part of the silicon compound particles with carbon coating either simultaneously with or following inserting Li into the silicon compound particles, wherein
   the negative electrode active material particles are carbon-coated so as to make an amount of carbon coating larger than 0 mass% and 1 mass% or less relative to a total amount of the silicon compound particles and a carbon coating, and the carbon coating composed of at least any one of a compound having O-C=O bond and a compound having C-C bond.
[19]: The method for producing a negative electrode active material for a non-aqueous electrolyte secondary battery according to the [18], wherein
   the step of inserting Li into the silicon compound particles is performed by either an electrochemical method or a method by a redox reaction.

It should be noted that the present invention is not limited to the above-described embodiments. The embodiments are just examples, and any examples that have substantially the same feature and demonstrate the same functions and effects as those in the technical concept disclosed in claims of the present invention are included in the technical scope of the present invention.

## Claims

1. A negative electrode active material for a non-aqueous electrolyte secondary battery containing negative electrode active material particles in which the negative electrode active material particles comprise silicon compound particles containing a silicon compound (SiOₓ: 0.5≤x≤1.6), wherein
the silicon compound particles are a negative electrode active material for a non-aqueous electrolyte secondary battery containing a Li compound,
the negative electrode active material particles are at least partially coated with a carbon coating,
an amount of the carbon coating on the negative electrode active material particles relative to a total amount of the silicon compound particles and the carbon coating is larger than 0 mass% and 1 mass% or less,
the carbon coating contains a coating composed of at least any one of a compound having O-C=O bond and a compound having C-C bond, and
the silicon compound particles contain crystalline Li₂SiO₃ as the Li compound.

2. The negative electrode active material for a non-aqueous electrolyte secondary battery according to claim 1, wherein
the negative electrode active material has an intensity ratio of 0≤Ia/Ib≤3.0 where an intensity Ia around 290 eV is attributable to the O-C=O bond and an intensity Ib around 285 eV is attributable to the C-C bond both obtained by an X-ray photoelectron spectroscopy.

3. The negative electrode active material for a non-aqueous electrolyte secondary battery according to claim 1 or 2, wherein
the negative electrode active material satisfies 1≤Ie/Ic≤18.5 with an intensity Ie around 2θ=18.7° attributable to Li₂SiO₃ compared to an intensity Ic around 2θ=47.5° attributable to Si, as obtained by an X-ray diffraction.

4. The negative electrode active material for a non-aqueous secondary battery according to claim 3, wherein
a peak around 2θ=18.7° attributable to Li₂SiO₃ obtained by the X-ray diffraction of the negative electrode active material has a half-value width of 0.5° or more and 3.0° or less.

5. The negative electrode active material for a non-aqueous secondary battery according to claim 1 or 2, wherein
a crystallite size attributable to a Si(220) crystal face obtained by the X-ray diffraction of the negative electrode active material is 5 nm or less.

6. The negative electrode active material for a non-aqueous secondary battery according to claim 1 or 2, wherein
the negative electrode active material has at least one or more peaks in at least one region given as chemical shift values of a region of -80 ppm or more and less than -70 ppm, a region of -70 ppm or more and less than -60 ppm, and a region of -60 ppm or more and less than -30 ppm, which are obtained from a ²⁹Si-MAS-NMR spectrum of the negative electrode active material.

7. The negative electrode active material for a non-aqueous secondary battery according to claim 6, wherein
peak intensity ratios If/Ii and Ih/Ii obtained from the ²⁹Si-MAS-NMR spectrum of the negative electrode active material satisfy both 0≤If/Ii≤0.23 and 0≤Ih/Ii≤1.1, where
If represents a peak intensity of the peak obtained as the chemical shift value in the region of -60 ppm or more and less than -30 ppm,
Ih represents a peak intensity of the peak obtained as the chemical shift value in the region of -70 ppm or more and less than -60 ppm, and
Ii represents a peak intensity of the peak obtained as the chemical shift value in the region of -80 ppm or more and less than -70 ppm.

8. The negative electrode active material for a non-aqueous electrolyte secondary battery according to claim 1 or 2, wherein
an intensity ratio Id/Ig of a D band and a G band in Raman spectrometry of the negative electrode active material is 0≤Id/Ig≤2.0.

9. The negative electrode active material for a non-aqueous electrolyte secondary battery according to claim 1 or 2, wherein
an intensity ratio ISi/Ig of a peak intensity of Si and a G band in Raman spectrometry of the negative electrode active material is 0≤ISi/Ig≤5.0.

10. The negative electrode active material for a non-aqueous electrolyte secondary battery according to claim 1 or 2, wherein
the silicon compound particles have a median diameter of 0.5 µm or more and 20 µm or less.

11. The negative electrode active material for a non-aqueous electrolyte secondary battery according to claim 1 or 2, wherein
the negative electrode active material particles either do not contain Li₂CO₃; or a portion of an outermost surface of the particle is coated with crystalline Li₂CO₃, in addition, the negative electrode active material satisfies 0≤Ij/Ic≤10 with a peak intensity Ij around 2θ=21° attributable to Li₂CO₃, compared to an intensity Ic around 2θ=47.5° attributable to Si, as obtained by the X-ray diffraction.

12. The negative electrode active material for a non-aqueous electrolyte secondary battery according to claim 1 or 2, wherein
the negative electrode active material is coated with a carbon layer that is different from the carbon coating.

13. The negative electrode active material for a non-aqueous electrolyte secondary battery according to claim 1 or 2, wherein
the negative electrode active material is coated with the carbon coating which has a peak attributable to the G band in Raman spectrometry of the negative electrode active material in a range of 1588 cm⁻¹ to 1598 cm⁻¹.

14. A non-aqueous electrolyte secondary battery comprising the negative electrode active material for a non-aqueous electrolyte secondary battery according to claim 1 or 2.

15. A mobile terminal comprising the non-aqueous electrolyte secondary battery according to claim 14.

16. An electric vehicle comprising the non-aqueous electrolyte secondary battery according to claim 14.

17. A power storage system comprising the non-aqueous electrolyte secondary battery according to claim 14.

18. A method for producing a negative electrode active material for a non-aqueous electrolyte secondary battery containing negative electrode active material particles, the method comprising steps of:
preparing silicon compound particles containing a silicon compound (SiOₓ: 0.5≤x≤1.6);
inserting Li into the silicon compound particles to produce Li₂SiO₃ as a Li compound; and
further coating at least part of the silicon compound particles with carbon coating either simultaneously with or following inserting Li into the silicon compound particles, wherein
the negative electrode active material particles are carbon-coated so as to make an amount of carbon coating larger than 0 mass% and 1 mass% or less relative to a total amount of the silicon compound particles and a carbon coating, and the carbon coating composed of at least any one of a compound having O-C=O bond and a compound having C-C bond.

19. The method for producing a negative electrode active material for a non-aqueous electrolyte secondary battery according to claim 18, wherein
the step of inserting Li into the silicon compound particles is performed by either an electrochemical method or a method by a redox reaction.
